# EUROPÄISCHE PATENTSCHRIFT

(11) **EP 4 530 946 B1**
(45) Veröffentlichungstag und Bekanntmachung des Hinweises auf die Patenterteilung: **11.11.2026**
(21) Anmeldenummer: 24200449.7
(22) Anmeldetag: 16.09.2024
(51) Int. Cl.: G06Q 10/04, G06Q 10/08, G06Q 10/087, G06Q 50/04

(54) **VERFAHREN ZUM BETREIBEN EINES PLATTENLAGERS EINER PLATTENAUFTEILANLAGE, AUTOMATISCHE EINRICHTUNG EINES PLATTENLAGERS, SOWIE PLATTENLAGER**
METHOD FOR OPERATING A PLATE BEARING OF A PLATE PARTITIONING SYSTEM, AUTOMATIC DEVICE OF A PLATE BEARING, AND PLATE BEARING
PROCÉDÉ DE FONCTIONNEMENT D'UN PALIER À PLAQUES D'UNE INSTALLATION DE DIVISION DE PLAQUES, INSTALLATION AUTOMATIQUE D'UN PALIER À PLAQUES AINSI QUE PALIER À PLAQUES

(30) Priorität: 27.09.2023 DE 102023126221
(43) Veröffentlichungstag der Anmeldung: 02.04.2025
(73) Patentinhaber: HOMAG Plattenaufteiltechnik GmbH, 75365 Calw (DE)
(72) Erfinder: Tiedemann, Jörg, 21769 Lamstedt (DE)
(74) Vertreter: DREISS Patentanwälte PartG mbB

(56) Entgegenhaltungen:
- EP-A1- 1 713 028
- DE-A1- 102013 204 689

## Beschreibung

Die Erfindung betrifft ein Verfahren zum Betreiben eines Plattenlagers einer Plattenaufteilanlage, eine automatische Einrichtung eines Plattenlagers, sowie ein Plattenlager nach den Oberbegriffen der nebengeordneten Ansprüche.

Vom Markt her bekannt sind Plattenlager für Plattenaufteilanlagen. In solchen Plattenaufteilanlagen werden typischerweise großformatige Platten für die Herstellung von Möbelteilen verarbeitet. Ein Beispiel für eine solche Plattenaufteilanlage ist eine Plattenaufteilsäge. Zu einer solchen Plattenaufteilanlage gehört typischerweise ein Plattenlager. In diesem sind vorwiegend zwei Arten von Platten gelagert: zum einen sind dort sogenannte "Rohplatten" gelagert. Bei diesen handelt es sich meist um von einem Hersteller von Rohplatten gelieferte großformatige Ausgangswerkstücke, aus denen in der Plattenaufteilanlage aufgeteilte Werkstücke hergestellt werden. Werden die Rohplatten nicht vollständig aufgeteilt, dann entsteht eine sogenannte "Restplatte", die von der Plattenaufteilanlage in das Plattenlager zurückgeführt und dort eingelagert wird. Sie kann dann zu einem späteren Zeitpunkt für eine weitere Aufteilung wieder der Plattenaufteilanlage zugeführt werden.

Der Betrieb des Plattenlagers wird, typischerweise zusammen mit dem Betrieb der Plattenaufteilanlage, durch eine automatische Einrichtung gesteuert und/oder geregelt. Hierzu verfügt die automatische Einrichtung typischerweise über einen oder mehrere Computer, die zur Durchführung bestimmter Verfahren programmiert sind. Die Handhabung der Werkstücke im Plattenlager wird typischerweise durch eine automatische Handhabungseinrichtung bewerkstelligt, beispielsweise einen Portalroboter.

Für einen möglichst effizienten Betrieb des Plattenlagers und auch der Plattenaufteilanlage ist es notwendig, dass sowohl bestimmte gewünschte Rohplatten als auch bestimmte gewünschte Restplatten der Plattenaufteilanlage aus dem Plattenlager schnell zugeführt werden können. Es sollten daher möglichst wenig Umstapelungen notwendig sein, um an eine bestimmte, in einem Stapel eines Lagerplatzes des Plattenlagers gelagerte Platte zu gelangen. Bekannte diesbezügliche Optimierungsverfahren sind in der DE 10 2005 017 488 A1 sowie der DE 10 2012 214 856 A1 beschrieben. Die EP 1 713 028 A1 beschreibt ein Verfahren zur Optimierung eines Plattenlagers. Die DE 10 2013 204 689 A1 offenbart ein Verfahren zur Aufrechterhaltung einer hohen Leistungsfähigkeit eines Plattenlagersystems.

Die vorliegende Erfindung hat die Aufgabe, die Zugriffszeit auf eine bestimmte gewünschte Restplatte nochmals zu reduzieren und hierdurch den Betrieb der Plattenaufteilanlage und auch des Plattenlagers weiter zu optimieren.

Diese Aufgabe wird durch ein Verfahren, eine automatische Einrichtung und ein Plattenlager mit den Merkmalen der nebengeordneten Ansprüche gelöst. Vorteilhafte Weiterbildungen sind in Unteransprüchen angegeben.

Ein Vorteil des erfindungsgemäßen Verfahrens besteht darin, dass für die Einlagerung einer Platte in das Plattenlager nicht mehr nur ein starres Verfahren zur Verfügung steht, sondern dass im Rahmen einer Situationsanalyse unterschiedliche Szenarien - beispielsweise im Hinblick auf eine künftige Betriebsgeschwindigkeit des Plattenlagers - analysiert werden und dann auf der Basis der Situationsanalyse das am besten geeignet erscheinende Szenario bzw. das auf diesem Szenario basierende Verfahren für die Einlagerung der Platte angewendet wird. Auf diese Weise kann auf die sich während des Betriebs kontinuierlich ändernden Zustände im Plattenlager situativ reagiert werden. Im Ergebnis können auf diese Weise Restplatten beispielsweise so eingelagert werden, dass für eine nachfolgende bzw. in einem späteren Zeitraum geplante Auslagerung einer bestimmten gewünschten Platte - wenn überhaupt - nur vergleichsweise wenige Umstapelungen notwendig sind, und daher auf die gewünschte bestimmte Platte in vergleichsweise kurzer Zeit zugegriffen werden kann.

Konkret wird ein Verfahren zum Betreiben eines Plattenlagers einer Plattenaufteilanlage vorgeschlagen. In solchen Plattenaufteilanlagen werden typischerweise großformatige Platten für die Herstellung von Möbelteilen verarbeitet. Ein Beispiel für eine solche Plattenaufteilanlage ist eine Plattenaufteilsäge. Zu einer solchen Plattenaufteilanlage gehört typischerweise ein Plattenlager. In diesem sind vorwiegend zwei Arten von Platten gelagert: zum einen sind dort sogenannte "Rohplatten" gelagert. Bei diesen handelt es sich um von einem Hersteller von Rohplatten gelieferte großformatige Ausgangswerkstücke, aus denen in der Plattenaufteilanlage aufgeteilte Werkstücke hergestellt werden. Werden die Rohplatten nicht vollständig aufgeteilt, dann entsteht eine sogenannte "Restplatte", die von der Plattenaufteilanlage in das Plattenlager zurückgeführt und dort eingelagert wird. Sie kann dann zu einem späteren Zeitpunkt für eine weitere Aufteilung wieder der Plattenaufteilanlage zugeführt werden. Rohplatten und Restplatten werden hier und nachfolgend ganz allgemein als "Platten" bezeichnet.

Der Betrieb des Plattenlagers wird, typischerweise zusammen mit dem Betrieb der Plattenaufteilanlage, durch eine automatische Einrichtung gesteuert und/oder geregelt. Hierzu verfügt die automatische Einrichtung typischerweise über einen oder mehrere Computer, die zur Durchführung bestimmter Verfahren programmiert sind. Die Handhabung der Werkstücke im Plattenlager wird typischerweise durch eine automatische Handhabungseinrichtung bewerkstelligt, beispielsweise einen Portalroboter mit einem pneumatischen Sauggreifer.

Bei dem erfindungsgemäßen Verfahren kann ein Lagerplatz für eine konkret einzulagernde Platte von der besagten automatischen Einrichtung gemäß mindestens einem ersten Szenario ermittelt werden. Ein solches Szenario kann durch eine bestimmte Randbedingung oder mehrere bestimmte Randbedingungen definiert sein, gemäß denen die Einlagerung der einzulagernden Platte erfolgen kann bzw. erfolgen soll. Eine solche Randbedingung kann beispielsweise sein, dass eine Platte nur an einem ganz bestimmten Lagerplatz eingelagert werden darf, oder dass eine Platte an einem ganz bestimmten Lagerplatz nicht eingelagert werden darf, oder dass eine Platte nur gemeinsam mit bestimmten anderen Platten, oder gerade nicht gemeinsam mit bestimmten anderen Platten eingelagert werden darf.

Bei dem erfindungsgemäßen Verfahren kann ein Lagerplatz für die konkret einzulagernde Platte von der automatischen Einrichtung zusätzlich gemäß mindestens einem zweiten Szenario ermittelt werden. Dieses zweite Szenario unterscheidet sich von dem ersten Szenario durch mindestens eine Randbedingung. Vor der Einlagerung der Platte wird von der automatischen Einrichtung eine Situationsanalyse durchgeführt. Eine solche Situationsanalyse kann beispielsweise eine Mehrzahl von Simulationen beinhalten, wobei jede Simulation einem bestimmten Szenario zugeordnet ist bzw. auf diesem basiert, und wobei mit jeder Simulation der selbe zu optimierende Betriebsparameter ermittelt wird. Typischerweise charakterisiert der zu optimierende Parameter eine Betriebsgeschwindigkeit des Plattenlagers während eines künftigen Zeitraums.

Ist aufgrund der Situationsanalyse bekannt, welches der Szenarien auf der Basis der Situationsanalyse im Hinblick auf den besagten Betriebsparameter optimal ist, wird auf der Basis des Ergebnisses der Situationsanalyse entweder das erste Szenario oder das zweite Szenario zur Ermittlung des Lagerplatzes der spezifischen einzulagernden Platte ausgewählt. Das Ergebnis der Situationsanalyse kann jedoch nicht nur für die Ermittlung des Lagerplatzes der spezifischen und "jetzt" einzulagernden Platte verwendet werden, sondern kann auch für eine kontinuierliche Optimierung des Verfahrens auf Grundlage der historischen Daten verwendet werden.

Bei einer Weiterbildung ist vorgesehen, dass bei der Situationsanalyse für alle Szenarien - beispielsweise durch die besagten Simulationen - abgeschätzt wird, welche Anzahl von Umstapelungen während eines in der Zukunft liegenden Zeitraums (repräsentativer künftiger Produktionszeitraum, z.B. Produktionswoche oder Produktionsmonat) notwendig sein werden, um eine Platte von ihrem Lagerplatz auszulagern. Dabei kann der Zeitraum beispielsweise durch eine Bedienperson des Plattenlagers vorab definiert werden. Der Zeitraum kann dabei Stunden oder Tage oder auch Wochen betragen. Der zu optimierende Betriebsparameter wäre in diesem Fall also die Anzahl von Umstapelungen. Die Bewertung der Szenarien erfolgt also auf der Basis einer Analyse der durchgeführten bzw. durchzuführenden Lagerbewegungen, um zu errechnen, welches Szenario eine geringere Anzahl an Gesamtbewegungen beispielsweise des Portalroboters des Plattenlagers erwarten lässt.

Beispielsweise kann es sein, dass in dem in der Zukunft liegenden Zeitraum von der Plattenaufteilanlage ganz bestimmte Platten benötigt und daher aus dem Plattenlager ausgelagert werden müssen. Es ist daher von Vorteil, wenn diese ganz bestimmten Platten in den Stapeln von Platten in den Lagerplätzen des Plattenlagers möglichst weit oben liegen, so dass nur wenige oberhalb von diesen liegende Platten umgestapelt werden müssen, um an die gewünschten bestimmten Platten zu gelangen. Für die Ermittlung des Lagerplatzes für die spezifisch einzulagernde Platte wird danach jenes Szenario ausgewählt, mit dem sich die geringste Anzahl an solchen Umstapelungen ergibt. Die Effizienz im Betrieb des Plattenlagers und somit auch der Plattenaufteilanlage wird auf diese Weise sehr einfach verbessert.

Bei einer Weiterbildung ist vorgesehen, dass die einzulagernde Platte eine Restplatte ist, und dass gemäß dem ersten Szenario die Restplatte nur auf einem Restplattenlagerplatz eingelagert werden darf. Nach der obigen Definition ist eine Restplatte eine solche Platte, welche bei einer nicht vollständigen Aufteilung einer Rohplatte oder einer Restplatte vorliegt, und welche in das Plattenlager zurückgeführt und dort eingelagert werden muss, um für eine spätere weitere Aufteilung zur Verfügung zu stehen. Solche Restplatten sind typischerweise "Unikate". Typischerweise hat nämlich jede Restplatte andere Abmessungen als die anderen Restplatten. Ein Restplattenlagerplatz ist ein solcher Lagerplatz, auf dem ausschließlich Restplatten gelagert sind. Es ist also ein Lagerplatz, auf dem in "chaotischer" Reihenfolge und Anordnung Restplatten mit jeweils unterschiedlichen Abmessungen und gegebenenfalls auch aus unterschiedlichen Materialien aufeinander gelagert sind. Dabei kann jedoch jedem Restplattenlagerplatz eine bestimmte Gruppe von Restplatten zugeordnet sein, beispielsweise eine durch einen Größenbereich definierte Gruppe oder eine durch ein Material definierte Gruppe. Bei der vorliegenden Weiterbildung des erfindungsgemäßen Verfahrens wird dieses "klassische" Szenario berücksichtigt, wodurch das erfindungsgemäße Verfahren auch bei typischen bisherigen Plattenlagern bzw. Plattenaufteilanlagen eingesetzt werden kann.

Bei einer Weiterbildung ist vorgesehen, dass die einzulagernde Platte eine Restplatte ist, und dass gemäß dem zweiten Szenario die Restplatte auch auf einem Rohplattenlagerplatz eingelagert werden darf. Dieses Szenario basiert darauf, Restplatten nicht - gegebenenfalls nach Größen und Materialien gruppiert - ausschließlich in mehreren Restplattenlagerplätzen "chaotisch" zu lagern, sondern Restplatten auf möglichst viele Lagerplätze zu verteilen, um so die Anzahl der Restplatten, die in chaotischer Reihenfolge übereinander liegen, zu reduzieren und damit die Anzahl der zu erwartenden Umstapelungen zu reduzieren. Im Vergleich zur Lagerung vieler Restplatten in einem Stapel auf einem Restplattenlagerplatz müssen nur sehr wenige Restplatten übereinander gelegt werden, um den Gesamtbestand der Restplatten im Plattenlager zu verteilen. Bei der vorliegenden Weiterbildung des erfindungsgemäßen Verfahrens wird auch dieses "klassische" Szenario berücksichtigt, wodurch das erfindungsgemäße Verfahren auch bei typischen bisherigen Plattenlagern bzw. Plattenaufteilanlagen eingesetzt werden kann.

Die Erfindung basiert also darauf, dass unterschiedliche Verfahrensszenarien bewertet werden. Beispielsweise werden entweder die Restplatten im Plattenlager auf bestimmte Rohplattenlagerplätze verteilt, oder die Restplatten werden in separaten Restplattenlagerplätzen gemeinsam chaotisch gelagert. Dadurch, dass unterschiedliche Lagerverfahren im Mix angewendet werden können und dass das jeweils optimale Lagerverfahren und die jeweils optimal geeigneten Lagerplätze für die Verteilung von Restplatten ausgewählt werden können, reduziert sich die Anzahl der Umstapelungen bei der Auslagerung von Restplatten signifikant, und die Nachteile des jeweiligen Verfahrens werden minimiert (hoher Umstapelanteil bei chaotischen Restplattenstapeln und zusätzliche Umstapelungen bei Ein- und Auslagerung von Rohplatten bei Verteilung der Restplatten (auch) auf Rohplattenlagerplätzen).

Die Verfahrensszenarien werden beispielsweise unter Berücksichtigung der durchgeführten bzw. durchzuführenden Lagerbewegungen bewertet, um zu errechnen, welches Verfahrensszenario für Restplatten (Lagerung aller Restplatten in separaten Restplattenlagerplätzen oder Verteilung der Restplatten auf Rohplattenplätzen) eine geringere Anzahl an Gesamtbewegungen erwarten lässt.

Bei einer Weiterbildung ist vorgesehen, dass ein Lagerplatz für eine einzulagernde Platte von der automatischen Einrichtung zusätzlich gemäß mindestens einem dritten Szenario ermittelt werden kann, dass die einzulagernde Platte eine Restplatte ist, und dass gemäß dem dritten Szenario die Restplatte auch oder nur auf einem Rohplattenlagerplatz eingelagert werden kann, dabei jedoch mindestens ein bestimmter Rohplattenlagerplatz nicht berücksichtigt wird. Hierdurch können bestimmte Notwendigkeiten bei der Auslagerung von Rohplatten berücksichtigt werden, wodurch ebenfalls die Effizienz im Betrieb des Plattenlagers erhöht wird.

Bei einer Weiterbildung hierzu ist vorgesehen, dass der bestimmte Rohplattenlagerplatz ein sortenrein bewirtschafteter Rohplattenlagerplatz oder Rohplattenlagerplatz mit einem hohen Anteil an der Gesamtauslagerung ist. Ein "sortenrein bewirtschafteter" Rohplattenlagerplatz ist ein solcher Rohplattenlagerplatz, auf dem nur Rohplatten mit identischen Abmessungen (Höhe, Breite, Dicke) und aus demselben Material (bspw. Materialart Holz oder Kunststoff, mit/ohne Beschichtung, Art der Beschichtung, Farbe, etc.) gelagert werden. Ein Rohplattenlagerplatz "mit einem hohen Anteil an der Gesamtauslagerung" ist ein solcher Rohplattenlagerplatz, aus dem für die Situationsanalyse betrachteten in der Zukunft liegenden Zeitraum besonders viele Rohplatten (also signifikant mehr als von anderen Rohplattenlagerplätzen) entnommen werden sollen. Durch die vorliegende Weiterbildung wird der Betrieb eines solchen Rohplattenlagerplatzes somit durch das Einlagern von Restplatten nicht gestört. Damit bleibt die durch einen solchen Rohplattenlagerplatz ermöglichte hohe Effizienz erhalten.

Bei einer Weiterbildung ist vorgesehen, dass ein erster Rohplattenlagerplatz, der einen geringeren Auslageranteil hat als ein zweiter Rohplattenlagerplatz, zuerst für die Einlagerung einer Restplatte verwendet wird. Auch dies führt dazu, dass ein besonders effektiv nutzbarer Rohplattenlagerplatz nicht durch die Einlagerung einer Restplatte gestört wird.

Bei einer Weiterbildung ist vorgesehen, dass für die Situationsanalyse mindestens einer der folgenden Parameter berücksichtigt wird, vorzugsweise alle folgenden Parameter berücksichtigt werden: Anzahl der Restplatten im Plattenlager, Anzahl der Restplattenauslagerungen, Anzahl der möglichen Restplatten pro Lagerplatz, Anzahl der zur Verfügung stehenden Rohplatten, Anzahl der zur Verfügung stehenden Restplattenlagerplätze, Anzahl der benötigten Lagerplätze für die Einlagerung, Anzahl der benötigten Lagerplätze für die Auslagerung. Diese Parameter definieren sehr gut die in einem Plattenlager möglichen Situationen und sind numerisch von der automatischen Einrichtung im Rahmen beispielsweise von Simulationen sehr gut und einfach zu berücksichtigen. Beispielsweise sind einige der oben genannten Parameter aus Aufteilplänen, die von der Plattenaufteilanlage während des in der Zukunft liegenden Zeitraums realisiert werden sollen, bekannt. Weitere Parameter sind durch die Auslegung bzw. Geometrie des Plattenlagers vorgegeben.

Bei einer Weiterbildung ist vorgesehen, dass bei der Situationsanalyse berücksichtigt wird, wie viele Auslagerungen aus einem Lagerplatz in einem in der Vergangenheit liegenden Zeitraum durchgeführt wurden. Mit diesem Verfahren können historische Daten für die Abschätzung des in der Zukunft liegenden Betriebs des Plattenlagers bzw. der Plattenaufteilanlage verwendet werden, wodurch die Genauigkeit der Situationsanalyse verbessert wird.

Bei einer Weiterbildung ist vorgesehen, dass bei der Situationsanalyse berücksichtigt wird, wie viele unterschiedliche Platten auf einem bestimmten Lagerplatz bereits gelagert sind. Auch dies dient zur Verbesserung der Effizienz im Betrieb des Plattenlagers, da bei einer hohen Anzahl von unterschiedlichen Platten an diesem Lagerplatz bereits mit einer vergleichsweise hohen Anzahl von Umstapelungen gerechnet werden kann, sodass eine weitere Einlagerung einer Restplatte auf einem solchen Lagerplatz die hohe Anzahl von zu erwartenden Umstapelungen nochmals erhöhen würde.

Bei einer Weiterbildung ist vorgesehen, dass die Durchführung des Verfahrens von einem Parameter in einer Stammdatenbank abhängt. Beispielsweise kann in der Stammdatenbank ein bestimmtes Verfahren für die Einlagerung von Restplatten, welche bestimmte Abmessungen aufweisen oder aus einem bestimmten Material hergestellt sind, durch einen solchen Parameter vordefiniert werden, um die Ermittlung des optimalen Lagerverfahrens weiter einzugrenzen bzw. um für bestimmte Materialien ein Lagerverfahren vorzugeben, weil z.B. für sehr exotische Materialien durchaus eine höhere Anzahl an Umstapelungen zulässig sein kann. Weiterhin kann in der Stammdatenbank durch einen solchen Parameter ein Lagerplatz für die Lagerung von Restplatten ausgeschlossen oder fest definiert werden, um die Ermittlung der zur Verfügung stehenden Lagerplätze für die Verteilung der Restplatten entweder weiter einzugrenzen oder im Gegenteil bewusst auszuweiten, weil beispielsweise ein bestimmter Rohplattenlagerplatz keinesfalls mit Restplatten belegt werden soll, weil auf die in diesem Rohplattenlagerplatz gelagerten Platten - aus welchen Gründen auch immer - immer ein sofortiger Zugriff möglich sein soll.

Grundsätzlich kann über geeignete Auswertungen und Anzeigen in einem Lagerverwaltungsprogramm eine Bedienperson die erwarteten Umstapelungen bei den verschiedenen Szenarien anzeigen bzw. angezeigt bekommen, damit dann gezielt weiter Einfluss genommen werden kann, um z.B. bestimmte Materialien oder Lagerplätze bewusst einem Szenario zuzuordnen bzw. davon auszunehmen.

Zu der Erfindung gehört auch eine automatische Einrichtung eines Plattenlagers, mit einem Prozessor und einem Speicher, welche zur Ausführung eines Verfahrens nach wenigstens einer der oben angegebenen Arten ausgebildet ist.

Zu der Erfindung gehört auch ein Plattenlager mit einer automatischen Einrichtung, welche zur Ausführung des Verfahrens nach wenigstens einer der oben angegebenen Arten ausgebildet ist.

Nachfolgend wird eine Ausführungsform der Erfindung unter Bezugnahme auf die Zeichnung erläutert. In dieser zeigen:
- Figur 1: eine schematische Draufsicht auf ein Plattenlager und eine Plattenaufteilanlage;
- Figur 2: eine schematische Draufsicht auf das Plattenlager von Figur 1 mit einer Mehrzahl von Lagerplätzen;
- Figur 3: eine schematische perspektivische Ansicht eines Restplattenlagerplatzes des Plattenlagers von Figur 2 mit einem Stapel von chaotisch gestapelten Restplatten;
- Figur 4: eine schematische perspektivische Ansicht eines Rohplattenlagerplatzes des Plattenlagers von Figur 2 mit einem Stapel von Rohplatten und drei darauf liegenden Restplatten;
- Figur 5: eine schematische perspektivische Ansicht eines Rohplattenlagerplatzes des Plattenlagers von Figur 2 mit einem Stapel nur von Rohplatten;
- Figur 6: ein Flussdiagramm eines Verfahrens zum Betreiben des Plattenlagers der Figuren 1 und 2.

Nachfolgend tragen funktionsäquivalente Elemente und Bereiche in unterschiedlichen Figuren die gleichen Bezugszeichen. Darüber hinaus werden Elemente und Bereiche nur bei der erstmaligen Erwähnung im Detail erläutert.

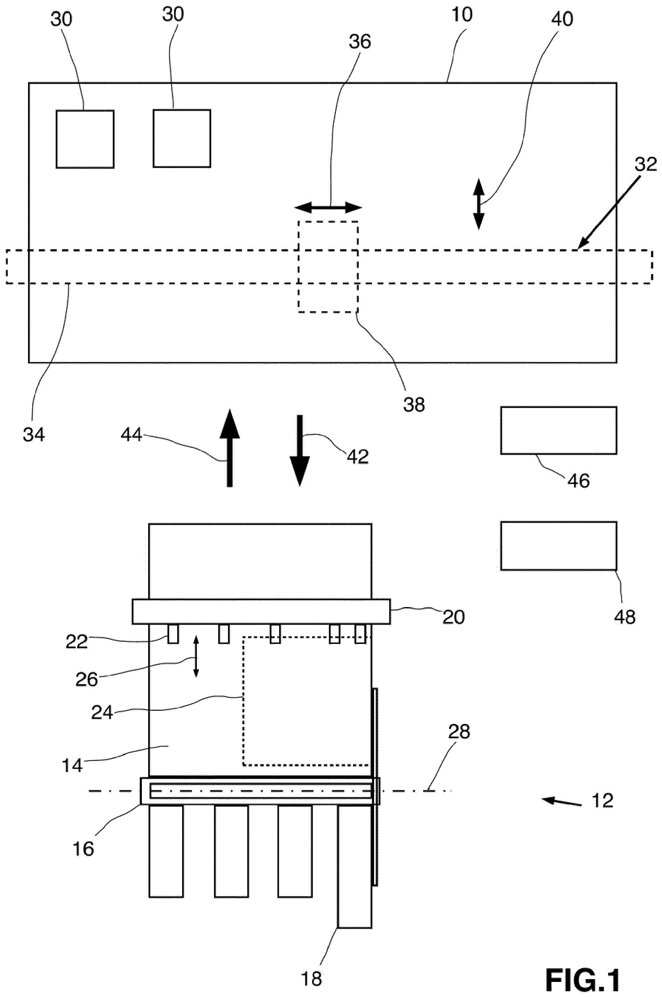

In Figur 1 ist ein Plattenlager 10 dargestellt, welches im Zusammenhang mit einer Plattenaufteilanlage 12 eingesetzt wird.

In der Plattenaufteilanlage 12 werden vorliegend beispielhaft großformatige Platten für die Herstellung von Möbelteilen verarbeitet. Ein Beispiel für eine solche Plattenaufteilanlage ist eine Plattenaufteilsäge. Die Plattenaufteilanlage 12 ist vorliegend klassisch aufgebaut und umfasst einen Zuführtisch 14, einen Maschinentisch 16 und einen aus mehreren Segmenten bestehenden Entnahmetisch 18. An einem portalartigen Programmschieber 20 sind mehrere Spannzangen 22 befestigt, mit denen eine auf dem Zuführtisch 14 und/oder dem Maschinentisch 16 liegende Platte 24 in einer Förderrichtung 26 einer Aufteillinie 28 zugeführt werden kann. Längs zu der Aufteillinie 28 kann beispielsweise ein auf einem Sägewagen befindliches Sägeaggregat (nicht gezeichnet) bewegt werden, durch welches die Platte 24 zunächst in streifenförmige aufgeteilte Werkstücke aufgeteilt wird. Diese können erforderlichenfalls durch weitere Aufteilungen bearbeitet werden.

Die Platte 24 wird der Plattenaufteilanlage 12 durch das Plattenlager 10 zur Verfügung gestellt. Hierzu verfügt das Plattenlager 10 über eine Mehrzahl von Lagerplätzen 30, von denen in Figur 1 jedoch aus Gründen der Übersichtlichkeit nur zwei gezeichnet sind. Die Platte 24 sowie weitere im Plattenlager 10 gelagerte Platten werden durch eine automatische Handhabungseinrichtung 32 gehandhabt. Vorliegend beispielhaft handelt es sich bei dieser um einen Portalroboter mit einem oberhalb von den Lagerplätzen 30 angeordneten portalartigen Balken 34, der motorisch in erste Richtungen (Doppelpfeil 36) hin- und her bewegt werden kann. Zu dem Portalroboter gehört ferner eine an dem portalartigen Balken 34 angeordnete Sauggreifeinrichtung 38 ("Saugtraverse"), die relativ zu dem portalartigen Balken 34 motorisch in zweite Richtungen (Doppelpfeil 40) hin- und her bewegt werden kann. Außerdem kann die Sauggreifeinrichtung 38 in einer Richtung senkrecht zur Zeichnungsebene der Figur 1 motorisch bewegt werden. Die Sauggreifeinrichtung 38 kann an einer Oberseite einer Platte angreifen und diese so anheben und gemäß den Richtungen 36 und 40 bewegen.

Die Reichweite der Handhabungseinrichtung 32 reicht dabei über das Plattenlager 10 hinaus bis zum Zuführtisch 14 der Plattenaufteilanlage 12. Auf diese Weise können durch die Handhabungseinrichtung 32 nicht nur Platten innerhalb des Plattenlagers 10 bewegt werden, sondern auch vom Plattenlager 10 zum Zuführtisch 14 der Plattenaufteilanlage 12 hin bewegt werden (Pfeil 42) und vom Zuführtisch 14 der Plattenaufteilanlage 12 wieder zurück zum Plattenlager 10 bewegt werden (Pfeil 44).

Gesteuert werden der Betrieb der Plattenaufteilanlage 12 sowie des Plattenlagers 10 durch jeweilige automatische Einrichtungen 46 und 48, bei denen es sich beispielsweise um Computer mit Speichern und Prozessoren sowie Ein- und Ausgabeeinrichtungen handeln kann. Diese können miteinander kommunizieren und so einen informationstechnischen Verbund bilden. Ferner verfügen die Plattenaufteilanlage 12 und das Plattenlager 10 über eine Vielzahl von Sensoren, welche ihre Signale den automatischen Einrichtungen 46 und 48 zur Verfügung stellen und welche es so den automatischen Einrichtungen 46 und 48 erlauben, das Plattenlager 10 und die Plattenaufteilanlage 12 in einer gewünschten und vorprogrammierten Art und Weise halb- oder vollautomatisch gesteuert und geregelt zu betreiben.

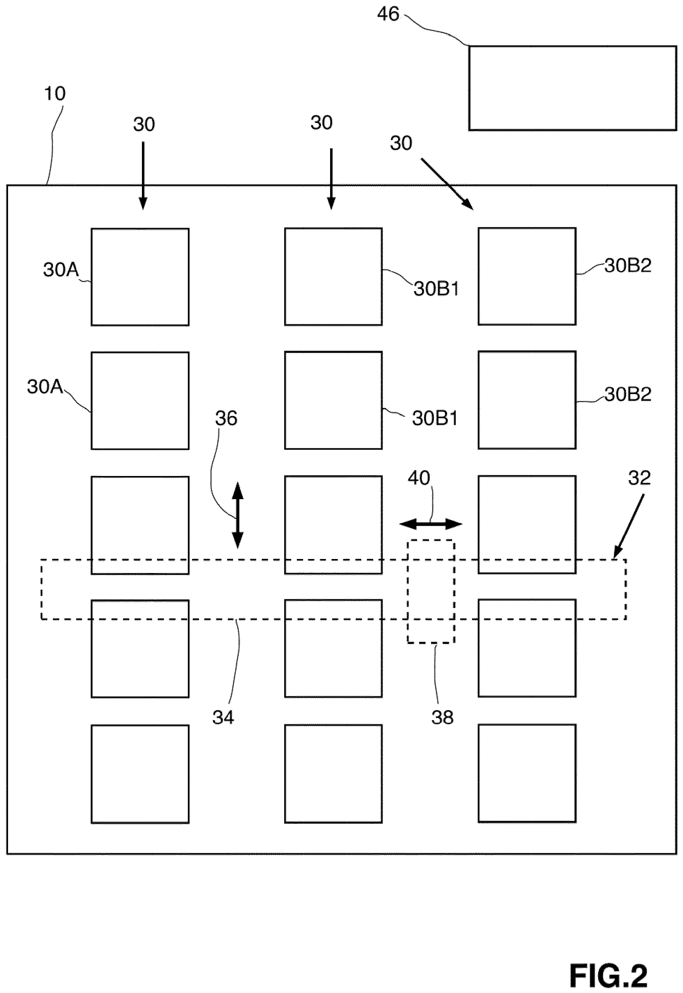

Wie aus Figur 2 hervorgeht, umfasst das vorliegend beispielhaft gezeigte Plattenlager 10 insgesamt 15 Lagerplätze 30. Es versteht sich, dass bei anderen Ausführungsformen eine völlig andere Anzahl von Lagerplätzen 30 vorgesehen sein kann. Wie nachfolgend dargelegt werden wird, kann die Anzahl der Lagerplätze 30 des Plattenlagers 10 auch während des Betriebs des Plattenlagers 10 verändert werden.

Vorliegend beispielhaft sind die Lagerplätze 30 in zwei Kategorien unterteilt: Lagerplätze 30 der Kategorie A sind Rohplattenlagerplätze, die entweder sortenrein bewirtschaftet werden oder die einen hohen Anteil an der Gesamtauslagerung haben. Was dies bedeutet, wird weiter unten im Detail erläutert werden. Lagerplätze 30 der Kategorie B sind alle anderen Lagerplätze 30, die nicht zu der Kategorie A gehören. Dabei kann die Kategorie B wiederum unterteilt werden in solche Rohplattenlagerplätze, in denen sowohl Rohplatten als auch Restplatten gelagert werden können, und solche Lagerplätze, in denen ausschließlich Restplatten gelagert werden ("Restplattenlagerplätze"). Was dies bedeutet, wird ebenfalls weiter unten im Detail erläutert werden.

Lagerplätze 30 der Kategorie A sind in Figur 2 mit dem Bezugszeichen 30A bezeichnet. Rohplattenlagerplätze der Kategorie B, in denen sowohl Rohplatten als auch Restplatten gelagert werden können, sind in Figur 2 mit dem Bezugszeichen 30B1 bezeichnet, und Lagerplätze der Kategorie B, in denen ausschließlich Restplatten gelagert werden können ("Restplattenlagerplätze"), sind in Figur 2 mit dem Bezugszeichen 30B2 bezeichnet.

Bei einer Rohplatte handelt es sich um ein von einem Hersteller von Rohplatten geliefertes großformatiges Ausgangswerkstück, aus dem in der Plattenaufteilanlage 12 aufgeteilte Werkstücke hergestellt werden. Wird eine Rohplatte in der Plattenaufteilanlage 12 nicht vollständig aufgeteilt, dann entsteht eine sogenannte "Restplatte", die von der Plattenaufteilanlage 12 in das Plattenlager 10 zurückgeführt und dort auf einem der Lagerplätze 30 eingelagert werden kann. Eine solche Restplatte kann dann zu einem späteren Zeitpunkt für eine weitere Aufteilung wieder der Plattenaufteilanlage 12 zugeführt werden.

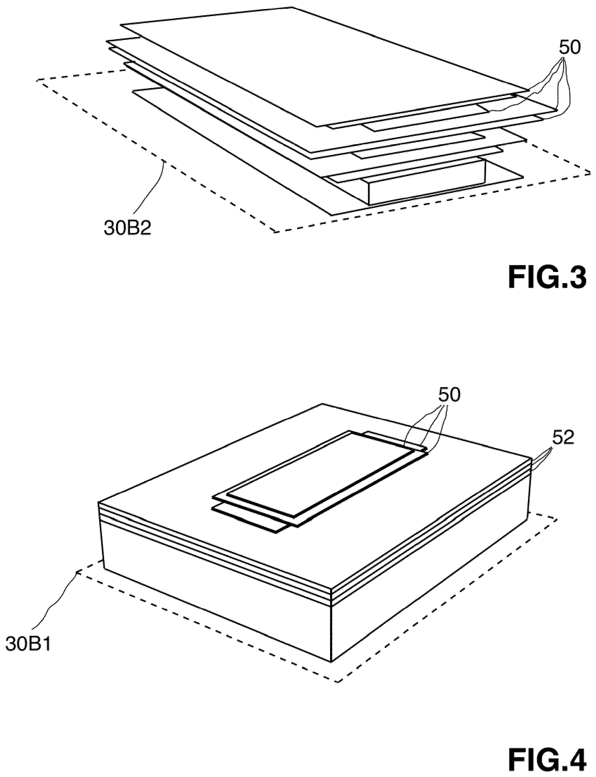

Ein Beispiel für einen Restplattenlagerplatz 30B2 ist in Figur 3 dargestellt. Entsprechende Restplatten tragen dort das Bezugszeichen 50. Diese sind in dem Restplattenlagerplatz 30B2 in chaotischer Reihenfolge aufeinander gestapelt, und die Restplatten 50, die dort gestapelt sind, haben unterschiedliche Abmessungen und sind aus unterschiedlichen Materialien hergestellt. Der automatischen Einrichtung 46 sind die Eigenschaften jeder einzelnen Restplatte 50 und deren Position im Stapel des Restplattenlagerplatzes 30B2 bekannt.

Wird von der Plattenaufteilanlage 12 für einen Aufteilvorgang eine Restplatte 50 angefordert, die im Stapel des Restplattenlagerplatzes 30B2 nicht ganz oben liegt, müssen zuerst die oberhalb von der gewünschten und angeforderten Restplatte 50 liegenden Restplatten 50 umgestapelt zu werden, um auf die angeforderte Restplatte 50 zugreifen zu können.

Ein Beispiel für einen Rohplattenlagerplatz 30B1 ist in Figur 4 dargestellt. Entsprechende Rohplatten tragen dort das Bezugszeichen 52. Die Rohplatten 52 des Rohplattenlagerplatzes 30B1 haben alle dieselben Abmessungen und sind aus demselben Material hergestellt (aus Gründen der Einfachheit sind in Figur 43 nur die obersten Rohplatten 52 im Stapel gezeichnet). Oben auf den Rohplatten 52 liegen vorliegend beispielhaft drei Restplatten 50, die in chaotischer Reihenfolge aufeinandergestapelt sind. Auch hier sind der automatischen Einrichtung 46 die Eigenschaften jeder einzelnen Restplatte 50 und deren Position im Stapel des Rohplattenlagerplatz das 30B1 bekannt.

Wird von der Plattenaufteilanlage 12 für einen Aufteilvorgang eine Rohplatte 52 vom Rohplattenlagerplatz 30B1 angefordert, dann müssen zuerst die oberhalb von den Rohplatten 52 liegenden Restplatten 50 umgestapelt werden, um auf die angeforderte Rohplatte 52 zugreifen zu können. Wird von der Plattenaufteilanlage 12 für einen Aufteilvorgang eine Restplatte 50 vom Rohplattenlagerplatz 30B1 angefordert, die nicht ganz oben liegt, dann müssen ebenfalls zuerst die oberhalb von der gewünschten und angeforderten Restplatte 50 liegenden Restplatten 50 umgestapelt werden, um auf die angeforderte Restplatte 50 zugreifen zu können. Man erkennt, dass für einen Zugriff auf die unterste Restplatte 50 im Stapel des Rohplattenlagerplatzes 30B1 viel weniger Umstapelungen notwendig sind als für einen Zugriff auf die unterste Restplatte 50 im Stapel des Restplattenlagerplatzes 30B2.

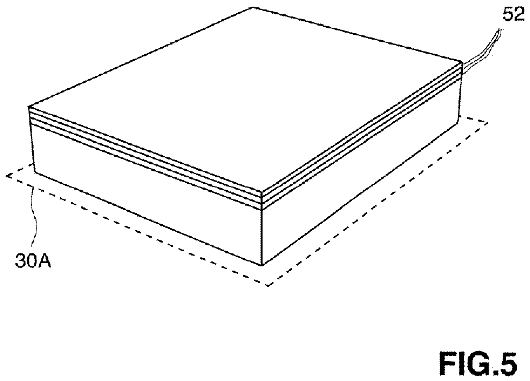

Ein Beispiel für einen Rohplattenlagerplatz 30A ist in Figur 5 dargestellt. Auch dort tragen die Rohplatten das Bezugszeichen 52. Die Rohplatten 52 des Rohplattenlagerplatzes 30A haben alle dieselben Abmessungen und sind aus demselben Material hergestellt.

Ein Ziel beim Betrieb des Plattenlagers 10 ist es, dieses möglichst effizient zu betreiben und die Zeit, die für Umstapelungen erforderlich ist, möglichst gering zu halten. Hierzu wird vorliegend beispielhaft dann, wenn eine Restplatte 50 von der Plattenaufteilanlage 12 in das Plattenlager 10 gemäß dem Pfeil 44 zurücktransportiert und an einem Lagerplatz 30 eingelagert werden soll, ein ganz bestimmtes Verfahren ausgeführt, gemäß dem der Lagerplatz 30 für die einzulagernde Restplatte 50 ermittelt wird. Dieses Verfahren wird automatisch vorliegend beispielhaft von der automatischen Einrichtung 46 ausgeführt.

Mit diesem Verfahren werden unterschiedliche Szenarien simuliert und wird für jedes Szenario im Rahmen einer Situationsanalyse die Anzahl der notwendigen Umstapelungen im künftigen Betrieb des Plattenlagers 10 für einen ganz bestimmten Zeitraum abgeschätzt. Am Ende wird der Lagerplatz 30 für die einzulagernde Restplatte 50 auf der Basis jenes Szenarios ermittelt, bei dem nur eine vergleichsweise geringe Anzahl an notwendigen Umstapelungen notwendig sein wird.

Beispielhaft sind vorliegend drei unterschiedliche Szenarien vorgesehen. Beim Szenario 1 kann die einzulagernde Restplatte 50 zusammen mit anderen Restplatten 50 ausschließlich in einen der Restplattenlagerplätze 30B2 eingelagert werden. Beim Szenario 2 kann die einzulagernde Restplatte 50 in alle Rohplattenlagerplätze 30A und 30B1 eingelagert werden. Beim Szenario 3 kann die einzulagernde Restplatte 50 ausschließlich in die Rohplattenlagerplätze 30B1 eingelagert werden.

Die Rohplattenlagerplätze 30A können im Szenario 3 für die Einlagerung der Restplatte 50 also nicht genutzt werden. Beim Szenario 3 sollen als solche Rohplattenlagerplätze 30A, die sortenrein mit Rohplatten 52 eines hohen Produktionsanteils bewirtschaftet werden und/oder Rohplattenlagerplätze 30A, die einen signifikant höheren Anteil an den gesamten Auslagerungen als andere Rohplattenlagerplätze haben, nicht für die Einlagerung von Restplatten 50 ausgewählt werden, da dann der Effekt der zusätzlichen Umstapelung durch das Freiräumen solcher Rohplattenlagerplätze 30A zu einer zu starken Leistungsreduzierung führen würde.

Für die Situationsanalyse der einzelnen Szenarien werden die folgenden Parameter berücksichtigt: Anzahl der Restplatten 50 im Plattenlager 10, Anzahl der künftig vorgesehenen Auslagerungen von Restplatten 50 vom Plattenlager 10 in die Plattenaufteilanlage 12, Anzahl der möglichen Restplatten 50 pro Lagerplatz 30, Anzahl der zur Verfügung stehenden Rohplatten 52, Anzahl der zur Verfügung stehenden Restplattenlagerplätze 30B2, Anzahl der benötigten Lagerplätze 30 für die Einlagerung von Restplatten 50, Anzahl der benötigten Lagerplätze für die Auslagerung von Restplatten 50.

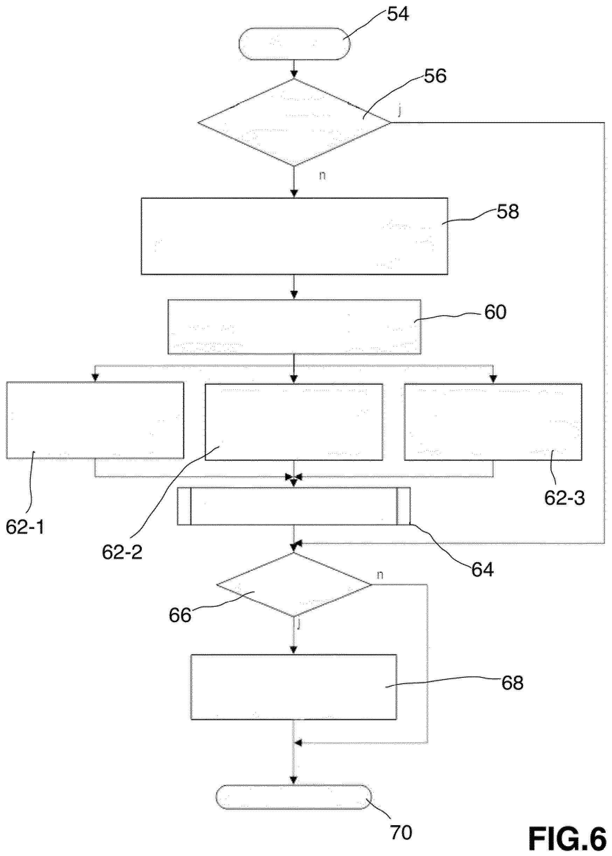

Um das ideale Lagerverfahren bzw. Szenario für die Einlagerung von Restplatten 50 zu ermitteln, wird vor jeder Einlagerung einer Restplatte 50 in das Plattenlager 10 das optimale Lagerverfahren bzw. Szenario für Restplatten 50 ermittelt. Ein mögliches Ablaufschema zur Ermittlung des Lagerplatzes 30 für eine einzulagernde Restplatte 50 wird nun unter Bezugnahme auf Figur 6 erläutert:
Das Verfahren beginnt in einem Startblock 54. Danach wird in einem Funktionsblock 56 abgefragt, ob in einem Speicher ("Stammdatenbank") der automatischen Einrichtung 46 ganz allgemein für einzulagernde Restplatten 50 oder spezifisch für eine Restplatte des konkret einzulagernden Typs ein ganz bestimmtes Szenario zur Ermittlung des Lagerplatzes 30 vordefiniert ist. Beispielsweise kann in der Stammdatenbank grundsätzlich ein ganz bestimmtes Lagerverfahren für Restplatten 50 mit bestimmten Abmessungen und/oder aus bestimmten Materialien vordefiniert sein, um die Ermittlung des optimalen Lagerverfahrens einzugrenzen. Ein Grund kann beispielsweise sein, dass für den späteren Zugriff auf eine jetzt einzulagernde Restplatte 50 aus einem "exotischen" Material, welches im späteren Betrieb nur selten von der Plattenaufteilanlage 12 angefordert werden wird, durchaus eine höhere Anzahl an Umstapelungen zulässig sein kann.

Ist die Antwort im Funktionsblock 56 "Nein", werden in einem Funktionsblock 58 die vorhandenen Lagerplätze 30 klassifiziert, und zwar vorliegend beispielhaft in die oben angegebenen Klassen von Lagerplätzen 30A, 30B1 und 30B2.

In einem nachfolgenden Funktionsblock 60 wird die Menge der Lagerplätze 30 entsprechend der Informationen aus der Stammdatenbank der automatischen Einrichtung 46 um weitere Lagerplätze 30 erhöht oder gegebenenfalls auch reduziert.

In nachfolgenden Funktionsblöcken erfolgt eine Situationsanalyse 62, indem Simulationen für die oben beschriebenen Szenarien durchgeführt werden, also das Szenario 1 (Funktionsblock 62-1), das Szenario 2 (Funktionsblock 62-2) und das Szenario 3 (Funktionsblock 62-3).

Im Funktionsblock 62-1 wird also ein Berechnungsverfahren für die geschätzte Anzahl der notwendigen Umstapelungen für die Auslagerung von Restplatten in einem repräsentativen künftigen Produktionszeitraum für das Szenario 1 durchgeführt. Die Anzahl der zu erwartenden Umstapelungen U_{Rest} von Restplatten 50 berechnet sich dabei wie folgt: ${U}_{Rest} = {Aus}_{Rest} * {UF}_{Rest}$ ${UF}_{Rest} = {Restanz}_{Platz} / 2$
- Restanz_{Platz} :: maximale Anzahl an gelagerten Restplatten 50 pro Restplattenlagerplatz 30B2
- UF_{Rest}:: Umstapelfaktor für Restplatten 50
- Aus_{Rest}:: Anzahl der Auslagerungen von Restplatten 50 im repräsentativen künftigen Produktionszeitraum
- U_{Rest}:: zu erwartende Umstapelungen im repräsentativen künftigen Produktionszeitraum

Im Funktionsblock 62-2 wird ein Berechnungsverfahren für die Anzahl der notwendigen Umstapelungen für die Auslagerung von Restplatten 50 in dem repräsentativen künftigen Produktionszeitraum für das Szenario 2 durchgeführt. Die Anzahl der zu erwartenden Umstapelungen U_{Rest} von Restplatten 50 berechnet sich dabei wie folgt: ${U}_{Rest} = {Aus}_{Rest} * {UF}_{Rest} + {Um}_{Einl} + {Um}_{Ausl}$ ${UF}_{Rest} = {Restanz}_{Platz} / 2$ ${Um}_{Einl} = {Anz}_{Einplätze} * {Restanz}_{Platz} * {Prod}_{Tage}$ ${Um}_{Ausl} = {Anz}_{Ausplätze} * {Restanz}_{Platz} * {Prod}_{Tage}$
- Restanz_{Platz} :: maximale Anzahl an gelagerten Restplatten 50 pro Rohplattenlagerplatz 30B1 und 30A
- UF_{Rest}:: Umstapelfaktor für Restplatten 50
- Aus_{Rest}:: Anzahl der Auslagerungen von Restplatten 50 im repräsentativen künftigen Produktionszeitraum
- U_{Rest}:: zu erwartende Umstapelungen im repräsentativen künftigen Produktionszeitraum
- Anz_{Einplätze}:: Anzahl der Rohplattenlagerplätze 30B1 und 30A, auf die durchschnittlich pro Tag eingelagert wurde
- Anz_{Ausplätze}:: Anzahl der Rohplattenlagerplätze 30B1 und 30A, von denen durchschnittlich pro Tag ausgelagert wurde
- Prod_{Tage}:: Produktionstage im repräsentativen künftigen Produktionszeitraum
- Um_{Einl}:: Anzahl der zusätzlichen Umstapelungen durch Einlagerungen, um einen Stapel von Rohplatten 52 von darauf befindlichen Restplatten 50 zu befreien
- Um_{Ausl}:: Anzahl der zusätzlichen Umstapelungen durch Auslagerungen, um einen Stapel von Rohplatten 52 von darauf befindlichen Restplatten 50 zu befreien

Im Funktionsblock 62-3 wird ein Berechnungsverfahren für die Anzahl der notwendigen Umstapelungen für die Auslagerung von Restplatten 50 in dem repräsentativen künftigen Produktionszeitraum für das Szenario 3 durchgeführt. Die Anzahl der zu erwartenden Umstapelungen U_{Rest} von Restplatten 50 berechnet sich dabei wie folgt: ${U}_{Rest} = {Aus}_{Rest} * {UF}_{Rest} + {Um}_{Einl} + {Um}_{Ausl}$ ${UF}_{Rest} = {Restanz}_{Platz} / 2$ ${Um}_{Einl} = {Anz}_{Einplätze} * {Restanz}_{Platz} * {Prod}_{Tage}$ ${Um}_{Ausl} = {Anz}_{Ausplätze} * {Restanz}_{Platz} * {Prod}_{Tage}$
- Restanz_{Platz} :: maximale Anzahl an gelagerten Restplatten 50 pro Rohplattenlagerplatz 30B1
- UF_{Rest}:: Umstapelfaktor für Restplatten 50
- Aus_{Rest}:: Anzahl der Auslagerungen von Restplatten 50 im repräsentativen künftigen Produktionszeitraum
- U_{Rest}:: zu erwartende Umstapelungen im repräsentativen künftigen Produktionszeitraum
- Anz_{Einplätze}:: Anzahl der Lagerplätze 30B1, auf die durchschnittlich pro Tag eingelagert wurde
- Anz_{Ausplätze} :: Anzahl der Lagerplätze 30B1, von denen durchschnittlich pro Tag ausgelagert wurde
- Prod_{Tage}:: Produktionstage im repräsentativen künftigen Produktionszeitraum
- Um_{Einl}:: Anzahl der zusätzlichen Umstapelungen durch Einlagerungen, um einen Stapel von Rohplatten 52 von darauf befindlichen Restplatten 50 zu befreien
- Um_{Ausl}:: Anzahl der zusätzlichen Umstapelungen durch Auslagerungen, um einen Stapel von Rohplatten 52 von darauf befindlichen Restplatten 50 zu befreien

In einem nachfolgenden Funktionsblock 64 wird nun das Minimum für den Wert U_{Rest} aus den Berechnungen in den Funktionsblöcken 62-1, 62-2 und 62-3 ermittelt, und es wird festgelegt, dass für die einzulagernde Restplatte 50 der Lagerplatz 30 gemäß jenem Szenario ermittelt wird, für das sich in der Situationsanalyse 62 das Minimum für den Wert U_{Rest} ergeben hat.

In einem nachfolgenden Funktionsblock 66 wird abgefragt, ob im Funktionsblock 64 festgelegt wurde, dass für die Ermittlung des Lagerplatzes 30 für die einzulagernde Restplatte das Szenario 2 oder das Szenario 3 verwendet wird, oder ob im Funktionsblock 56 die Verwendung des Szenarios 2 oder des Szenarios 3 vordefiniert wurde. Ist die Antwort "Ja", wird in einem Funktionsblock 68 eine Verwendungsreihenfolge der für das Szenario 2 oder 3 definierten Lagerplätze 30 definiert.

Hierdurch kann berücksichtigt werden, ob einzelne Rohplattenlagerplätze 30A oder 30A + 30B1 einen höheren Anteil von Auslagerungen von Rohplatten 52 während des repräsentativen künftigen Produktionszeitraums als andere Rohplattenlagerplätze 30A oder 30A + 30B1 haben werden. Solche Rohplattenlagerplätze mit einem höheren Auslagerungsanteil würden in der Verwendungsreihenfolge erst später berücksichtigt werden. Ein Rohplattenlagerplatz 30A und/oder 30B1, der einen geringeren Auslageanteil hat als ein anderer Rohplattenlagerplatz 30A oder 30B1, würde also zuerst für die Einlagerung der Restplatte 50 verwendet werden.

In einem anschließenden Funktionsblock 70 wird entsprechend dem ausgewählten Szenario der Lagerplatz 30 für die einzulagernde Restplatte 50 ermittelt. Ist die Antwort im Funktionsblock 66 "Nein", wird unter Umgehung des Funktionsblocks 68 direkt zum Funktionsblock 70 gesprungen. Ist die Antwort im Funktionsblock 56 "Nein", wird unter Umgehung der nachfolgenden Funktionsblöcke direkt zum Funktionsblock 66 gesprungen.

Es versteht sich, dass die Anzahl an Szenarien bei Bedarf um weitere Szenarien erweitert werden kann. Auch kann die Anzahl der Klassen der Lagerplätze erweitert werden. Weiterhin kann der repräsentative künftige Produktionszeitraum (z.B. Produktionswoche oder Produktionsmonat) variabel gewählt werden, um Produktionsspitzen oder Produktionslücken über den entsprechenden Zeitraum zu glätten.

Ferner sei darauf hingewiesen, dass die Bedienperson über geeignete Auswertungen und Anzeigen in einem Lagerverwaltungsprogramm die erwarteten Umstapelungen bei den verschiedenen Lagerverfahren bzw. Szenarien angezeigt bekommen kann, damit die Bedienperson dann gezielt weiter Einfluss nehmen kann, um z.B. bestimmte Materialien oder Lagerplätze bewusst einem bestimmten Lagerverfahren bzw. Szenario zuzuordnen bzw. davon auszunehmen.

## Patentansprüche

1. Verfahren zum Betreiben eines Plattenlagers (10) einer Plattenaufteilanlage (12), bei dem ein Lagerplatz (30) für eine einzulagernde Platte (50) von einer automatischen Einrichtung (46) gemäß mindestens einem ersten Szenario ermittelt werden kann, **dadurch gekennzeichnet, dass** ein Lagerplatz (30) für die einzulagernde Platte (50) von der automatischen Einrichtung (46) zusätzlich gemäß mindestens einem zweiten Szenario ermittelt werden kann, und dass vor der Einlagerung der Platte (50) von der automatischen Einrichtung (46) eine Situationsanalyse durchgeführt und auf der Basis des Ergebnisses der Situationsanalyse das erste oder das zweite Szenario zur Ermittlung des Lagerplatzes (30) ausgewählt wird.

2. Verfahren nach dem vorherigen Anspruch, **dadurch gekennzeichnet, dass** bei der Situationsanalyse für alle Szenarien abgeschätzt wird, welche Anzahl von Umstapelungen während eines in der Zukunft liegenden Zeitraums notwendig sein werden, um eine Platte (50) von ihrem Lagerplatz (30) auszulagern, und dass für die Ermittlung des Lagerplatzes (30) für die einzulagernde Platte (50) jenes Szenario ausgewählt wird, mit dem sich die geringste Anzahl an Umstapelungen ergibt.

3. Verfahren nach wenigstens einem der vorhergehenden Ansprüche, **dadurch gekennzeichnet, dass** die einzulagernde Platte eine Restplatte (50) ist, und dass gemäß dem ersten Szenario die Restplatte (50) nur auf einem Restplattenlagerplatz (30B2) eingelagert werden darf.

4. Verfahren nach wenigstens einem der vorhergehenden Ansprüche, **dadurch gekennzeichnet, dass** die einzulagernde Platte eine Restplatte (50) ist, und dass gemäß dem zweiten Szenario die Restplatte (50) auch auf einem Rohplattenlagerplatz (30A, 30B1) eingelagert werden darf.

5. Verfahren nach wenigstens einem der vorhergehenden Ansprüche, **dadurch gekennzeichnet, dass** ein Lagerplatz (30) für eine einzulagernde Platte (50) von der automatischen Einrichtung (46) zusätzlich gemäß mindestens einem dritten Szenario ermittelt werden kann, dass die einzulagernde Platte eine Restplatte (50) ist, und dass gemäß dem dritten Szenario die Restplatte (50) auch oder nur auf einem Rohplattenlagerplatz (30A, 30B1) eingelagert werden kann, dabei jedoch mindestens ein bestimmter Rohplattenlagerplatz (30A) nicht berücksichtigt wird.

6. Verfahren nach Anspruch 5, **dadurch gekennzeichnet, dass** der bestimmte Rohplattenlagerplatz (30A) ein sortenrein bewirtschafteter Rohplattenlagerplatz oder ein Rohplattenlagerplatz mit einem hohen Anteil an der Gesamtauslagerung ist.

7. Verfahren nach wenigstens einem der vorhergehenden Ansprüche 4-6, **dadurch gekennzeichnet, dass** ein erster Rohplattenlagerplatz (30B1), der einen geringeren Auslageranteil hat als ein zweiter Rohplattenlagerplatz (30B1), zuerst für die Einlagerung einer Restplatte (50) verwendet wird.

8. Verfahren nach wenigstens einem der vorhergehenden Ansprüche, **dadurch gekennzeichnet, dass** für die Situationsanalyse mindestens einer der folgenden Parameter berücksichtigt wird, vorzugsweise alle folgenden Parameter berücksichtigt werden:
• Anzahl der Restplatten (50) im Plattenlager (10)
• Anzahl der Restplattenauslagerungen
• Anzahl der möglichen Restplatten (50) pro Lagerplatz (30)
• Anzahl der zur Verfügung stehenden Rohplatten (52)
• Anzahl der zur Verfügung stehenden Restplattenlagerplätze (30B2)
• Anzahl der benötigten Lagerplätze (30) für die Einlagerung
• Anzahl der benötigten Lagerplätze (30) für die Auslagerung

9. Verfahren nach wenigstens einem der vorhergehenden Ansprüche, **dadurch gekennzeichnet, dass** bei der Situationsanalyse berücksichtigt wird, wie viele Auslagerungen aus einem Lagerplatz (30) in einem in der Vergangenheit liegenden Zeitraum durchgeführt wurden.

10. Verfahren nach wenigstens einem der vorhergehenden Ansprüche, **dadurch gekennzeichnet, dass** bei der Situationsanalyse berücksichtigt wird, wie viele unterschiedliche Platten (50,52) auf einem bestimmten Lagerplatz (30) gelagert sind.

11. Verfahren nach wenigsten einem der vorhergehenden Ansprüche, **dadurch gekennzeichnet, dass** seine Durchführung von einem Parameter in einer Stammdatenbank abhängt.

12. Automatische Einrichtung (46) eines Plattenlagers (10) einer Plattenaufteilanlage (12), mit einem Prozessor und einem Speicher, **dadurch gekennzeichnet, dass** sie zur Ausführung des Verfahrens nach wenigstens einem der Ansprüche 1-11 ausgebildet ist.

13. Plattenlager (10) einer Plattenaufteilanlage (12) mit einer automatischen Einrichtung (46), **dadurch gekennzeichnet, dass** das Plattenlager (10) sowohl mindestens einen Lagerplatz (30A, 30B1) aufweist, in dem sowohl mindestens eine Rohplatte (52) als auch mindestens eine Restplatte (50) gelagert ist, als auch mindestens einen Restplattenlagerplatz (30B2) aufweist, in dem ausschließlich mindestens eine Restplatte (50) gelagert ist, und dass die automatische Einrichtung (46) zur Ausführung des Verfahrens nach wenigstens einem der Ansprüche 1-11 ausgebildet ist.

14. Plattenlager (10) nach Anspruch 13, **dadurch gekennzeichnet, dass** das Plattenlager (10) ferner mindestens einen Lagerplatz (30A) aufweist, in dem ausschließlich mindestens eine Rohplatte (52) gelagert ist.

## Claims

1. Method for operating a panel storage facility (10) of a panel dividing system (12), in which panel storage facility a storage location (30) for a panel (50) to be stored can be determined by an automatic device (46) according to at least a first scenario, **characterized in that** a storage location (30) for the panel (50) to be stored can be additionally determined by the automatic device (46) according to at least a second scenario, and **in that**, before the panel (50) is stored by the automatic device (46), a situation analysis is carried out and, based on the result of the situation analysis, the first or the second scenario is selected to determine the storage location (30).

2. Method according to the previous claim, **characterized in that**, in the situation analysis for all scenarios, it is estimated how many restacking operations will be necessary during a period in the future to remove a panel (50) from its storage location (30), and **in that**, for determining the storage location (30) for the panel (50) to be stored, the scenario having the fewest restacking operations is selected.

3. Method according to at least one of the preceding claims, **characterized in that** the panel to be stored is an offcut panel (50), and **in that**, according to the first scenario, the offcut panel (50) may only be stored in an offcut-panel storage location (30B2).

4. Method according to at least one of the preceding claims, **characterized in that** the panel to be stored is an offcut panel (50), and **in that**, according to the second scenario, the offcut panel (50) may also be stored in an unprocessed-panel storage location (30A, 30B1).

5. Method according to at least one of the preceding claims, **characterized in that** a storage location (30) for a panel (50) to be stored can be additionally determined by the automatic device (46) according to at least a third scenario, **in that** the panel to be stored is an offcut panel (50), and **in that**, according to the third scenario, the offcut panel (50) can also or only be stored in an unprocessed-panel storage location (30A, 30B1), but at least one specified unprocessed-panel storage location (30A) is not taken into account here.

6. Method according to claim 5, **characterized in that** the specified unprocessed panel storage location (30A) is an unprocessed-panel storage location, managed according to a single type of material, or an unprocessed panel storage location having a high proportion of the total removals from storage.

7. Method according to at least one of the preceding claims 4-6, **characterized in that** a first unprocessed-panel storage location (30B1), which has a lower proportion of removals from storage than a second unprocessed-panel storage location (30B1), is used first for storing an offcut panel (50).

8. Method according to at least one of the preceding claims, **characterized in that**, for the situation analysis, at least one of the following parameters is taken into account, preferably all of the following parameters are taken into account:
• number of offcut panels (50) in the panel storage facility (10)
• number of offcut-panel removals from storage
• number of possible offcut panels (50) per storage location (30)
• number of available unprocessed panels (52)
• number of available offcut-panel storage locations (30B2)
• number of storage locations required (30) for storage
• number of storage locations required (30) for removal from storage.

9. Method according to at least one of the preceding claims, **characterized in that** the situation analysis takes into account how many removals from a storage location (30) were carried out in a period in the past.

10. Method according to at least one of the preceding claims, **characterized in that** the situation analysis takes into account how many different panels (50,52) are stored in a specified storage location (30).

11. Method according to at least one of the preceding claims, **characterized in that** its execution depends on a parameter in a master database.

12. Automatic device (46) of a panel storage facility (10) of a panel dividing system (12), comprising a processor and a memory, **characterized in that** the device is designed to execute the method according to at least one of claims 1-11.

13. Panel storage facility (10) of a panel dividing system (12) comprising an automatic device (46), **characterized in that** the panel storage facility (10) has at least one storage location (30A, 30B1), in which at least one unprocessed panel (52) and at least one offcut panel (50) are stored, and at least one offcut-panel storage location (30B2), in which only at least one offcut panel (50) is stored, and **in that** the automatic device (46) is designed to execute the method according to at least one of claims 1-11.

14. Panel storage facility (10) according to claim 13, **characterized in that** the panel storage facility (10) also comprises at least one storage location (30A) in which only at least one unprocessed panel (52) is stored.

## Revendications

1. Procédé destiné à faire fonctionner un système de stockage de panneaux (10) d'une installation à diviser des panneaux (12), dans lequel un emplacement de stockage (30) pour un panneau à stocker (50) peut être déterminé par un dispositif automatique (46) selon au moins un premier scénario, **caractérisé par le fait qu'**un emplacement (30) pour le panneau à stocker (50) peut être déterminé par le dispositif automatique (46) en sus selon au moins un deuxième scénario, et qu'avant le stockage du panneau (50), une analyse de situation est effectuée par le dispositif automatique (46) et que, sur la base du résultat de l'analyse de situation, le premier ou le deuxième scénario est sélectionné pour déterminer l'emplacement de stockage (30).

2. Procédé selon la revendication précédente, **caractérisé par le fait que**, lors de l'analyse de situation, il est estimé pour tous les scénarios quel nombre de réempilages seront nécessaires pendant une période future pour déstocker un panneau (50) depuis son emplacement de stockage (30), et que, pour déterminer l'emplacement de stockage (30) pour le panneau à stocker (50), le scénario nécessitant le moins d'opérations de réempilage est sélectionné.

3. Procédé selon au moins l'une quelconque des revendications précédentes, **caractérisé par le fait que** le panneau à stocker est un panneau de reste (50) et que, selon le premier scénario, le panneau de reste (50) ne peut être stocké que dans un emplacement de stockage de panneaux de reste (30B2).

4. Procédé selon au moins l'une quelconque des revendications précédentes, **caractérisé par le fait que** le panneau à stocker est un panneau de reste (50) et que, selon le deuxième scénario, le panneau de reste (50) peut être stocké également dans un emplacement de stockage de panneaux bruts (30A, 30B1).

5. Procédé selon au moins l'une quelconque des revendications précédentes, **caractérisé par le fait qu'**un emplacement de stockage (30) pour un panneau à stocker (50) peut être déterminé par le dispositif automatique (46) en sus selon au moins un troisième scénario, que le panneau à stocker est un panneau de reste (50), et que, selon le troisième scénario, le panneau de reste (50) peut être stocké aussi ou uniquement dans un emplacement de stockage de panneaux bruts (30A, 30B1), mais qu'au moins un emplacement de stockage de panneaux bruts (30A) spécifique n'est pas pris en compte.

6. Procédé selon la revendication 5, **caractérisé par le fait que** l'emplacement de stockage de panneaux bruts (30A) spécifique est un emplacement de stockage de panneaux bruts géré de manière homogène ou un emplacement de stockage de panneaux bruts présentant une part élevée dans le déstockage total.

7. Procédé selon au moins l'une quelconque des revendications 4 à 6 précédentes, **caractérisé par le fait qu'**un premier emplacement de stockage de panneaux bruts (30B1) qui présente une proportion de déstockage inférieure à celle d'un deuxième emplacement de stockage de panneaux bruts (30B1), est utilisé en premier pour stocker un panneau de reste (50).

8. Procédé selon au moins l'une quelconque des revendications précédentes, **caractérisé par le fait qu'**au moins un des paramètres suivants est pris en compte, de préférence tous les paramètres suivants sont pris en compte pour l'analyse de situation:
• le nombre des panneaux de reste (50) dans le système de stockage de panneaux (10)
• le nombre de déstockages de panneaux de reste
• le nombre de panneaux de reste (50) possibles par emplacement de stockage (30)
• le nombre de panneaux bruts disponibles (52)
• le nombre d'emplacements de stockage de panneaux de reste (30B2) disponibles
• le nombre des emplacements de stockage requis (30) pour le stockage
• le nombre des emplacements de stockage requis (30) pour le déstockage.

9. Procédé selon au moins l'une quelconque des revendications précédentes, **caractérisé par le fait que**, lors de l'analyse de situation, il est pris en compte combien de déstockages ont été effectués depuis un emplacement de stockage (30) au cours d'une période passée.

10. Procédé selon au moins l'une quelconque des revendications précédentes, **caractérisé par le fait que**, lors de l'analyse de situation, il est pris en compte combien de panneaux différents (50, 52) sont stockés dans un emplacement de stockage (30) spécifique.

11. Procédé selon au moins l'une quelconque des revendications précédentes, **caractérisé par le fait que** sa mise en œuvre dépend d'un paramètre d'une base de données de base.

12. Dispositif automatique (46) d'un système de stockage de panneaux (10) d'une installation à diviser des panneaux (12), comprenant un processeur et une mémoire, **caractérisé par le fait qu'**il est configuré pour mettre en œuvre le procédé selon au moins l'une quelconque des revendications 1 à 11.

13. Système de stockage de panneaux (10) d'une installation à diviser des panneaux (12) comprenant un dispositif automatique (46), **caractérisé par le fait que** ledit système de stockage de panneaux (10) comprend aussi bien au moins un emplacement de stockage (30A, 30B1) dans lequel est stocké et au moins un panneau brut (52) et au moins un panneau de reste (50), qu'au moins un emplacement de stockage de panneaux de reste (30B2) dans lequel est stocké uniquement au moins un panneau de reste (50), et que ledit dispositif automatique (46) est configuré pour mettre en œuvre le procédé selon au moins l'une quelconque des revendications 1 à 11.

14. Système de stockage de panneaux (10) selon la revendication 13, **caractérisé par le fait que** le système de stockage de panneaux (10) comprend en outre au moins un emplacement de stockage (30A) dans lequel est stocké uniquement au moins un panneau brut (52).
